# EUROPEAN PATENT SPECIFICATION

(11) **EP 1 327 366 B1**
(45) Date of publication and mention of the grant of the patent: **27.06.2012**
(21) Application number: 01986818.1
(22) Date of filing: 09.10.2001
(51) Int. Cl.: H04L 12/66, H04L 29/06

(54) **ADDRESS DE-REGISTRATION FROM IP MULTIMEDIA NETWORKS**
DEREGISTRIERUNG VON ADRESSEN IN IP-MULTIMEDIA-NETZEN
DESENREGISTREMENT D'ADRESSE SUR RESEAU MULTIMEDIA INTERNET

(30) Priority: 09.10.2000 WO PCT/EP00/09886
(43) Date of publication of application: 16.07.2003
(73) Proprietor: Nokia Corporation, 02150 Espoo (FI)
(72) Inventor: HURTTA, Tuija, FIN-02660 Espoo (FI); HULKKONEN, Tony, Nokia Corporation, FIN-02150 Espoo (FI); RAJANIEMI, Jaakko, Nokia Corporation, FIN-02150 Espoo (FI); SIVANANDAN, Mohan, Nokia Corporation, FIN-02150 Espoo (FI); THUOHINO, Markku, Nokia Corporation, FIN-02150 Espoo (FI)
(74) Representative: Style, Kelda Camilla Karen
(86) International application number: PCT/EP2001/011656
(87) International publication number: WO 2002/032084

(56) References cited:
- WO-A-00/24209
- WO-A-99/61966
- PLASSE D: "Call control scenarios in the "all-IP" UMTS core network" PROCEEDINGS 11TH IEEE INTERNATIONAL SYMPOSIUM ON PERSONAL INDOOR AND MOBILE RADIO COMMUNICATIONS. PIMRC 2000, vol. 1, 18 - 21 September 2000, pages 322-326, XP002174862 London, UK
- NAPOLITANO-RICAGNI: "UMTS all-IP Mobility Management, Call and session control Procedure" INTERNET DRAFT, 24 March 2000 (2000-03-24), XP002149519

## Description

### FIELD OF THE INVENTION

The present invention relates to the de-registration of IP addresses assigned to users in an access network like GPRS (General Packet Radio Service) and IP (Internet Protocol) Multimedia networks.

### BACKGROUND OF THE INVENTION

The future VoIP (Voice over IP) networks are being designed using the layered approach, consisting of IM (IP Multimedia) networks providing the Application Level services over some Transport Level access network with maximum possible independence between the two layers. The 3GPP standardization efforts for R00 were focused on GPRS as the Transport Level access network.

In order to access the IP Multimedia services via the GPRS access network, the UE (UE refers to User Equipment or Application; whenever UE or User Equipment is referred to later in this document, it may also refer to possible User Agent or Application) must perform GPRS attach and activate the necessary PDP (Packet Data Protocol) context first, before registering with the IM network. During the PDP context activation, the GPRS network (GGSN (Gateway GPRS Support Node), more specifically) allocates to the UE an IP address, which is used by the GPRS network to address the UE. This IP address is conveyed to the IM network during the application level registration and is used also by the IM network to address the UE.

In most of the cases, the IP addresses are allocated to the user dynamically by the GPRS network during the PDP context activation. This can be arranged by two ways: either a GGSN has a pool of IP addresses or the DHCP (Dynamic Host Configuration Protocol) server allocates the address. An IP address thus allocated is freed when the PDP context is deactivated explicitly by the UE performing PDP context deactivation or implicitly, for example, after the UE becomes unreachable or fails to perform a periodic routing area update (RAU). The same IP address could be re-allocated to a different user by the GPRS network.

It may be possible that the UE explicitly performs PDP context deactivation with the GPRS network but does not perform any specific de-registration with the IM network. It is also possible that a PDP context associated with the UE is implicitly deactivated by the GPRS network for some reason as mentioned above. In all these situations, the IM network is not aware that the IP address of the UE has become invalid, or even worse, the IP address has been allocated to another user. In the later case, messages coming from the IM network (e.g., in call setup) might be delivered to a different UE which happens to use that IP address at present.

The WO 99 61966 A discloses a method for transmitting multimedia messages to a wireless terminal in a data transmission system which comprises at least one mobile communication network and at least one multimedia message server. In the method, each wireless terminal connected to the mobile communication network, is allocated an address specifying the wireless terminal, and at least one data transmission connection is activated for the wireless terminal. Information on the activation of the data transmission connection for the terminal is transmitted to the multimedia message server.

In Napolitano-Ricagni: 'UMTS all-IP Mobility Management, Call and session control Procedure' Internet Draft, March 24, 2000, XP002149519, call control and network resource allocation using SIP for multimedia call management in a packet-switched network, between UMTS/GPRS network and external multimedia IP-based networks are described.

### SUMMARY OF THE INVENTION

It is an object of the present invention to provide consistency of IP addresses assigned to users in an access network and networks providing application services through the access network.

According to a first aspect of the present invention, this object is achieved by a communication network system according to claim 1 or 30.

According to a second aspect of the present invention, the above-mentioned object is achieved by a method according to claim 16 or 51.

Furthermore, the above-mentioned object is achieved by first network means according to claim 28 as well as second network means according to claim 29 and a control entity according to claim 50.

According to one aspect of the present invention, this object is achieved by a communication network system comprising at least one first network (GPRS) and at least one second network providing application services over the first network, the first network allocating an IP address used by the second network, said system comprising:
means for detecting that the IP address allocated to a user equipment is de-allocated by the first network; and
means for initiating a de-registration of the de-allocated IP address in the second network.

The system may further comprise a control entity (PCF) being arranged to communicate with a gating network element (GGSN) in the first network and a dedicated call serving network element (CSCF) in the second network, the dedicated call serving network element serving the requested application,
wherein the gating network element detects a communication channel deactivation, and informs the control entity thereof,
wherein the control entity detects that the deactivated communication channel represents a signaling PDP context and initiates the de-registration in the dedicated call serving network element.

The gating network element may supply an indication of the signaling PDP context to the control entity.

The control entity may detect that the deactivated communication channel represents a signaling PDP context by checking request state information in the control entity.

The gating network element may be informed by a serving network element in the first network about a communication channel deactivation and forwards this information to the control entity.

Moreover, a network element in the first network may detect the de-allocation of the IP address and informs a server about the de-allocation, and the server initiates de-registration in call serving network elements in the second network, to which said IP-address is associated with.

The server may be a home subscriber server (HSS).

A network element (SGSN) in the first network may inform a database (HLR) about the de-allocation, the home database informs a mobility serving entity (UMS) about the de-allocation, and the mobility serving entity initiates the de-registration in a dedicated call serving network element (CSCF) in the second network, the dedicated call serving network element serving the requested application.

Furthermore, the network element in the first network may detect a detach of the user equipment causing the de-allocation for all IP addresses of the user equipment and inform the server about the de-allocation, and the server initiates de-registration in all call serving network elements of the user equipment.

A gating network element (GGSN) in the first network stores addresses of call serving network elements proposed to the user equipment against the allocated IP address and a user identification, the gating network element allocating the IP address and being involved in the discovery procedure of a call serving network element (CSCF) in the second network, the call serving network elements being able to serve the requested application, and, when the gating network element detects the de-allocation of the IP address, it initiates de-registration in all stored call serving network elements associated with the IP addresses in the second network.

The user equipment may inform a gating network element (GGSN) in the first network whenever it registers with a call serving network element (CSCF) in the second network, the gating network element allocating the IP address and being involved in the discovery procedure of a call serving network element (CSCF) in the second network, the call serving network elements being able to serve the requested application, wherein the gating network element stores addresses of the registered call serving network elements against the allocated IP addresses and a user identification, and, when the gating network element detects the de-allocation of the IP addresses, it initiates the de-registration in all stored call serving network nodes associated with the IP addresses.

The de-allocation of the IP address caused by a communication channel deactivation may be detected by a gating network element in the first network, and the server is informed by the gating network element about the de-allocation.

Moreover, a de-allocation of the IP address caused by a detach of the user equipment is detected by a serving network element (SGSN) in the first network, and the home server is informed by the serving network element about the de-allocation.

The server may be informed by the user equipment about all call serving network elements the user equipment is registered with.

The IP address may be de-registered in the second network by deleting a record in a home server (HSS) in the first network by a call serving network element in the second network.

An IP address may be allocated for each communication channel request performed by the user equipment.

The initiation of the de-registration may comprise the supply of a de-register message.

The first network may be a wireless access network and the second network may be an IP multimedia network.

In addition, the communication channel by be a PDP context.

Furthermore, the above-mentioned object is achieved by a control entity which is arranged to communicate with a gating network element (GGSN) in a first network and a dedicated call serving network element (CSCF) in a second network providing application services over the first network, the first network allocating an IP address used by the second network, the dedicated call serving network element serving the requested application,
wherein the control entity receives information from the gating network element about a communication channel deactivation
wherein the control entity detects that the deactivated communication channel represents a signaling PDP context and initiates the de-registration in the dedicated call serving network element.

Moreover, the above-mentioned object is achieved by a method of providing communication between at least one first network (GPRS) and at least one second network providing application services over the first network, the first network allocating an IP address used by the second network, said method comprising:
detecting that the IP address allocated to a user equipment is de-allocated by the first network; and
initiating a de-registration of the de-allocated IP address in the second network.

The invention applies to cases when the UE explicitly or implicitly de-registers with the access network and its IP address is freed. Of course, after this has happened, the UE is not capable of communicating with the CSCF. For example, an explicit de-allocation comprises a PDP context deactivation or an explicit detach procedure when the UE is switched off. An implicit de-allocation occurs, for example, when the UE fails to perform a periodic routing area update.

Users may be registered with multiple CSCFs of different IM networks, and the same user may have more than one IP addresses assigned.

The PCF functionality can be provided in a separate network element or may be contained in another network element like CSCF.

Further features of the present invention are defined in the dependent claims.

The invention applies to cases when the UE explicitly or implicitly de-registers with the access network and its IP address is freed. Of course, after this has happened, the UE is not capable of communicating with the CSCF. For example, an explicit de-allocation comprises a PDP context deactivation or an explicit detach procedure when the UE is switched off. An implicit de-allocation occurs, for example, when the UE fails to perform a periodic routing area update.

In the following the present invention will be described by way of embodiments thereof with reference to the accompanying drawings.

### BRIEF DESCRIPTION OF THE DRAWINGS

Fig. 1 shows a signaling diagram of an IP multimedia service access via GPRS access network.
Fig. 2 shows a signaling diagram of a de-register procedure caused by an IP address de-allocation according to an embodiment of the present invention.
Fig. 3 shows a signaling diagram of a de-register procedure caused by a PDP context deactivation according to an embodiment of the present invention.
Fig. 4 shows a signaling diagram of a de-register procedure caused by a PS detach according to an embodiment of the present invention.
Fig. 5 shows a signaling diagram of a de-register procedure caused by a PDP context deactivation according to an embodiment of the present invention.
Fig. 6 shows a signaling diagram of a de-register procedure caused by PS detach according to an embodiment of the present invention.
Fig. 7 shows a signaling diagram of a de-register or session termination procedure caused by an ICMP message according to a preferred embodiment of the present invention.

### DESCRIPTION OF THE PRESENT INVENTION

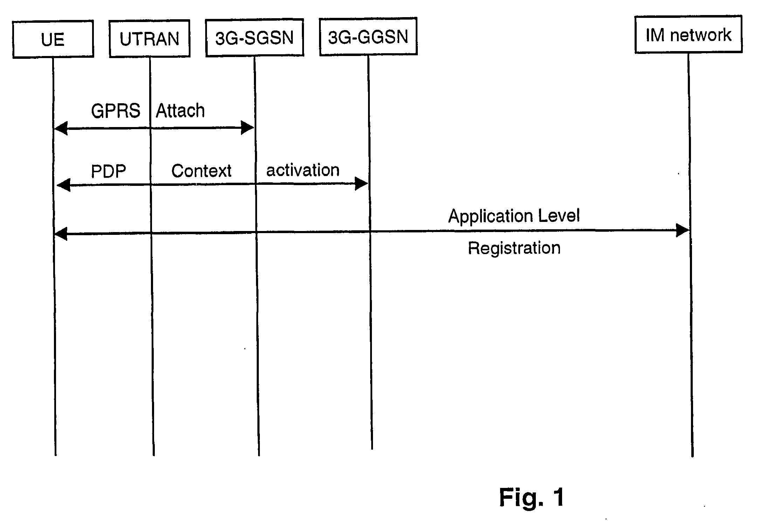

Fig. 1 shows a signaling diagram, schematically illustrating a GPRS attach performed by a UE (User Equipment) towards a GPRS (General Packet Radio Service) network via a UTRAN (Universal Terrestrial Radio Access Network). Before registering with an IM (IP Multimedia) network via a CSCF (Call Server Control Function), the UE has also to activate a PDP context towards a 3G-GGSN (Third Generation Gateway GPRS Support Node) via a 3G-SGSN (Third Generation Serving GPRS Support Node). The GGSN allocates to the UE an IP address which is used by the GPRS network to address the UE. This IP address is conveyed to the IM network during the application level registration by the UE or the User Application.

The UE may have multiple PDP Contexts activated with GPRS and have multiple IP addresses in use. Moreover, the UE may be registered with multiple CSCFs, where each CSCF may have multiple IP addresses for the same user, depending on the application or service.

In order to solve the above-described problem of inconsistent IP addresses used by the GPRS and the IM networks to address the users, arising due to the situation when an IP address assigned to a UE is de-allocated by the GPRS network for explicit or implicit reasons without the IM network knowing it, the IM network should be somehow informed about the de-allocation of the IP address assigned to a UE. As a minimal solution, the GPRS network must at least detect messages and data intended for the UE which had been assigned the now de-allocated IP address and discard them.

In situations where IM network cannot be informed about the release or reallocation of a UE IP address and the SGSN/GGSN does not "sniff" the mobile terminated call/session setups, the IM network must authenticate the user in every mobile terminated transaction to make sure that it is still the same user reached at the IP address which the CSCF has registered for a particular user. This, however, does not solve the problem of signaling messages being sent to a wrong target, but reduces the seriousness of the problem, as this would make sure that the mobile terminated setup fails due to authentication failure, though some signaling takes place.

Moreover, the UEs may be required to perform periodic registration updates at certain time intervals as agreed by the UE and the IM network during the first registration. A registration performed with a CSCF in an IM network would terminate if the UE does not perform a periodic registration update. This, however does not completely solve the above-described problem since the UE may have a longer duration for periodic registration updates than the one at the GPRS level for periodic routing area update and the two procedures may not be synchronized. Further, the possibility of explicit GPRS level deactivation while there is a valid IM level registration would still cause the above-mentioned problem.

These approaches merely reduce the chances or seriousness of the above-described problem. In the following, embodiments of the present, invention are described, which provide complete solutions of the problem.

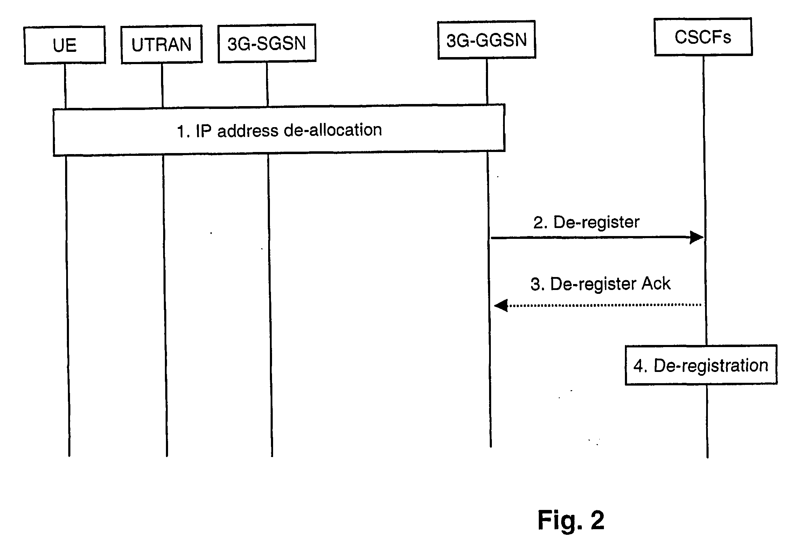

Fig. 2 shows a signaling diagram illustrating an IP address de-registration according to an embodiment of the present invention.

In order to register for IM network services, the UE is required to select a CSCF in the IM network with the assistance of the GPRS network, i.e. the GGSN, known as CSCF discovery procedure. Hence, the GGSN is aware of the CSCFs proposed to the UE. The GGSN also stores the addresses of the proposed CSCFs against the allocated IP address of the user and the IMSI (International Mobile Subscriber Identity), which identifies the user in the GPRS network. When the IP address of the user is de-allocated (Fig. 2: 1. IP address de-allocation) due to explicit reasons, i.e. when the UE performs a PDP context deactivation, or due to implicit reasons, i.e. after the UE becomes unreachable or fails to perform a periodic routing area update, the GGSN informs about this to all the proposed CSCFs (communication 2 in Fig. 2: the 3G-GGSN transmits a de-register message to the CSCFs), which were stored in the table. Thereupon, the CSCFs may acknowledge by sending a de-register Ack message (communication 3 in Fig. 2) to the GGSN. The CSCFs initiate the de-registration upon receiving the de-register message from the GGSN (Fig. 2: 4. De-registration).

In particular, in case of an explicit PDP context deactivation, the UE may choose to deactivate just one or two PDP contexts while it continues to have the rest of PDP contexts active. In this case, only the IP addresses allocated by the deactivated PDP contexts will be de-allocated while the UE continues to use other existing IP addresses. These de-allocated IP addresses may be used to address the UE by one or more CSCFs. Hence, in this case, the GGSN notifies only the one or more CSCFs using the de-allocated IP addresses to address the particular UE.

In the case of an implicit PDP context activation, the GPRS may de-activate all the active PDP contexts and IP addresses for that particular UE. Hence, in this case, the GGSN notifies all CSCFs of the particular UE for all IP addresses.

The GGSN must have up-to-date knowledge of the IP addresses used by a UE and the CSCFs the UE is registered to. Therefore, ever time the UE performs a new registration or de-registration, the GGSN must be aware of it.

The disadvantage of this solution is that the CSCFs which were not selected by the UE will also be notified. This can be avoided by informing the GGSN providing the addresses of the CSCFs (or logical names that can be used to get the actual address), whenever the UE registers with one or more CSCFs for service. The GGSN stores the addresses of the CSCFs against the allocated IP address of the user and the IMSI. When the IP address of the user is de-allocated, the GGSN informs about this to all those CSCFs, which were stored. When the UE de-registers with a CSCF too, it notifies the GGSN, so that the GGSN can remove this CSCF from the stored list. This way, only the CSCFs the UE has actually been registered to are notified by the GGSN.

Moreover, the mobile-terminated call/session setup message from the CSCF can be defined to contain also a user identifier like IMSI, which is the subscriber identity at GPRS level. The GGSN checks all the mobile-terminated call setup messages and compares them against its list of active IMSIs and the corresponding IP addresses. If the received IMSI and IP address pair is not found, the GGSN discards the data. Optionally the GGSN could also notify the CSCF about the situation if the CSCF address is known.

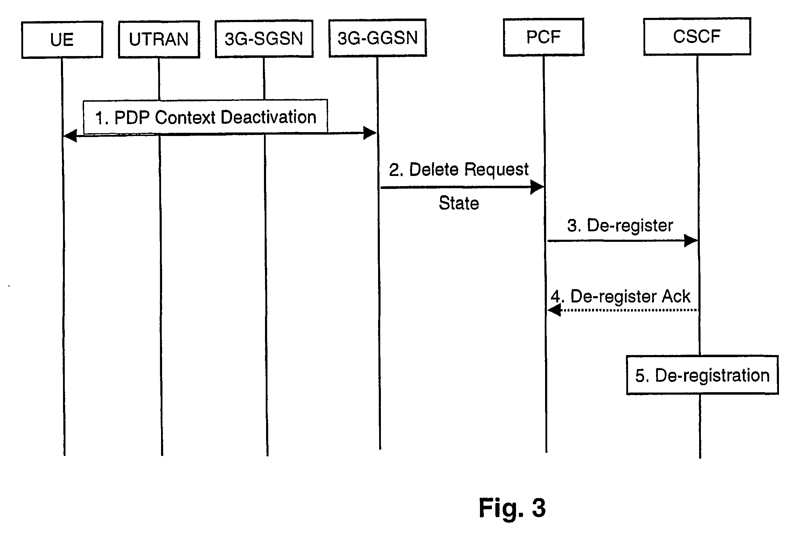

Fig. 3 shows a signaling diagram illustrating a de-registration procedure due to a PDP context deactivation according to an embodiment of the present invention.

This embodiment utilizes a PCF (Policy Control Function) to relay the indication on IP address de-allocation from the access network to the IM network. In general, the task of Policy Control is to divide the available network resource in a defined manner over the set of network users competing for that resource. Policy Control enforces a connection admission policy. A connection admission policy is a set of rules defining under what circumstances (other than the mere availability of the requested resource) the request for a logical connection is to be accepted.

The PCF is able to communicate with the GGSN and the CSCF. (It may also be possible for the PCF functionality to be incorporated into the CSCF or GGSN.) The UE needs a PDP context in order to communicate with the proxy CSCF. The PCF is informed about deactivating the signaling PDP context. As it is shown in communication 1 in Fig. 3, the signaling PDP context is deactivated in the GPRS network. Thereupon, the GGSN sends a Delete Request State (Request Id) message to the PCF (communication 2 in Fig. 3). The PCF notices that the deactivated PDP context is a signaling PDP context. This may happen either by receiving an indication of the signaling PDP context from the GGSN or by checking the request state information in the PCF. In communication 3 in Fig. 3, the PCF sends a De-register (Subscriber Id) message to the proxy CSCF. The PCF may also send the de-register message to a serving CSCF serving the IM network application requested by the UE.

The proxy CSCF may acknowledge by sending a De-register Ack (Subscriber Id) message to the PCF (communication 4 in Fig. 3). Then, the proxy CSCF initiates de-registration (Fig. 3: 5. De-registration) by informing the HSS about the de-registration.

When the UE deactivates its PDP contexts, the SGSN knows about it and forwards information (about the latest deactivated PDP context) to the GGSN. The GGSN forwards the information to the PCF, and the PCF forwards it to the CSCF.

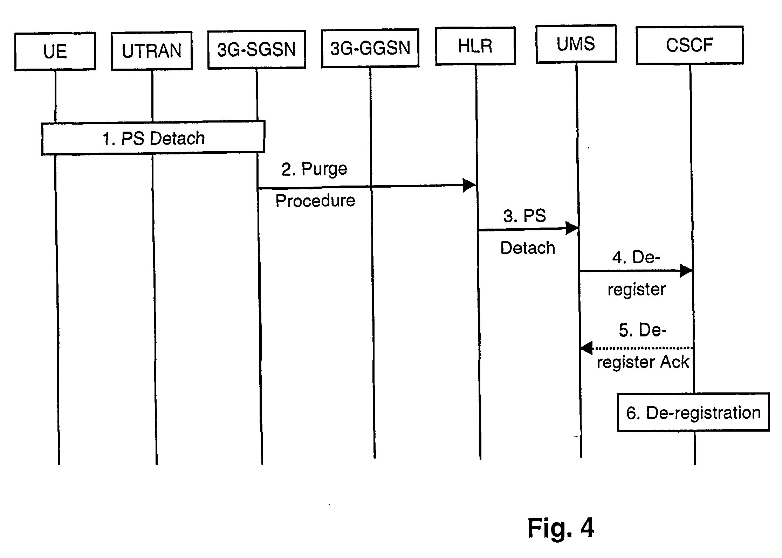

The access network can also trigger de-registration from the IP multimedia services when the UE performs a PS detach, i.e. when the IP address assigned to the UE is de-allocated implicitly as mentioned above. This case is shown in Fig. 4, illustrating a de-registration due to PS detach according to an embodiment of the present invention. In case of a PS detach (Fig. 4: 1. PS detach), the SGSN informs an HLR (Home Location Register) by performing the Purge procedure (communication 2 in Fig. 4). The HLR in turn informs a UMS (User Mobility Server) about the PS detach (communication 3 in Fig. 4), which then informs the CSCF (communication 4 in Fig. 4). When receiving the information, the CSCF initiates de-registration (communication 4 in Fig. 4). The CSCF may send a De-register Ack message (communication 5 in Fig. 4) to the UMS.

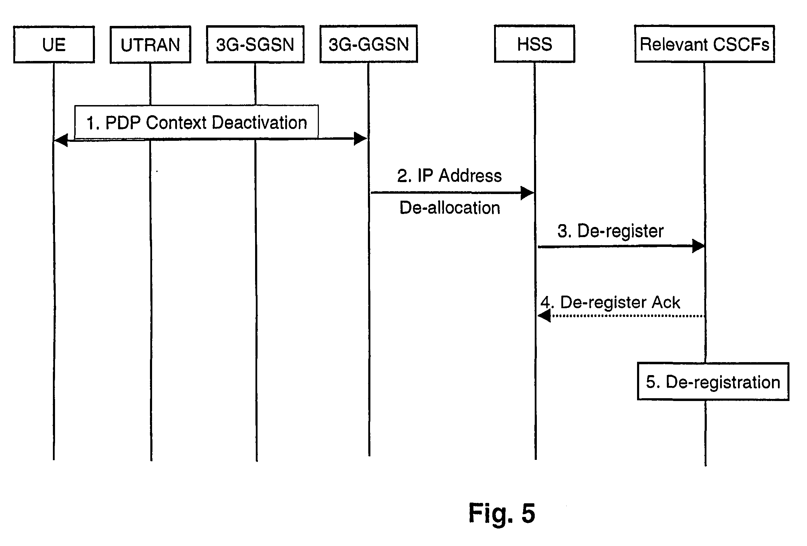

Fig. 5 shows a signaling diagram illustrating a de-registration due to a PDP context deactivation according to an embodiment of the present invention. When the PDP context is deactivated in the GPRS network, the GGSN indicates to an HSS (Home Subscriber Server) about it (Fig. 5: 2. IP address de-allocation). The HSS knows all possible CSCFs the UE has been registered with, and therefore, it informs the relevant CSCFs in sending de-register messages (communication 3 in Fig. 5). The relevant CSCFs may send de-register Ack messages to the HSS and initiate de-registration.

In the case of an explicit PDP context deactivation, the GGSN notifies the HSS about the particular UE and only the de-allocated IP addresses and then the HSS updates its own record and notifies only the one or more CSCFs using the deallocated IP addresses to address the particular UE.

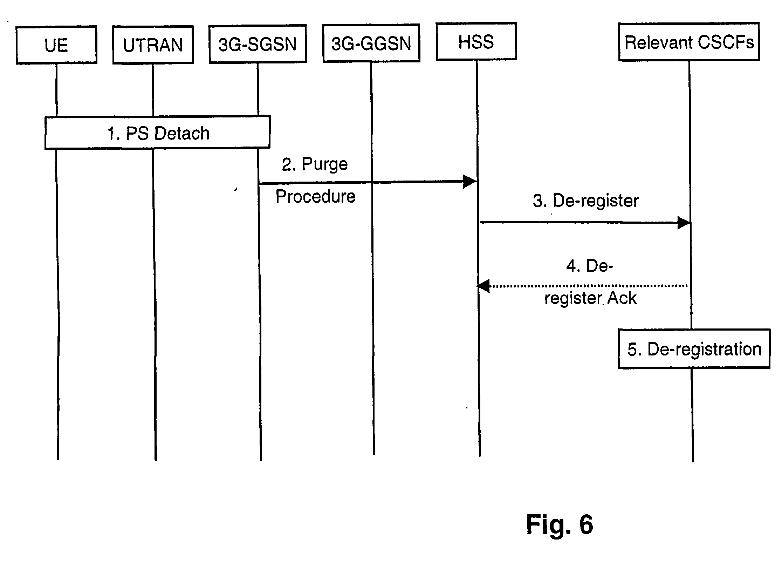

Fig. 6 shows the case of a de-registration due to a PS detach according to this embodiment. For example, if the UE fails to perform the periodic routing area update, the SGSN informs the HSS about it by performing the Purge procedure (communication 2 in Fig. 6), and the HSS in turn notifies the CSCFs serving the UE by sending the de-register message (communication 3 in Fig. 6). The relevant CSCFs may send the de-register Ack message and initiate the de-registration.

In the case of an implicit PDP context deactivation, the GPRS network de-activates all the active PDP contexts and IP addresses for that particular UE. Hence, the de-registration performed by the HSS is done for all IP addresses and all CSCFs of the particular UE.

The HSS must have up-to-date knowledge of the IP addresses used by a UE and the CSCFs the UE is registered to. Therefore, ever time the UE performs a new registration or de-registration, the HSS must be aware of it.

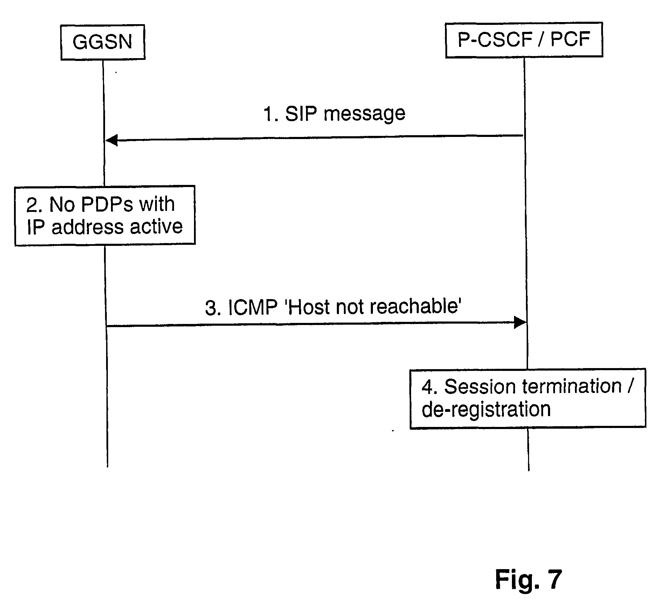

Fig. 7 shows a signaling diagram according to the preferred embodiment of the present invention.

As described above, in certain cases, e.g. in error cases, it is possible that all the PDP contexts of a UE are deactivated but the UE still remains registered to the IM network. In this case, it is not possible to carry a MT (Mobile Terminated) SIP (Session Initiation Protocol) message to the UE even if the IM network thinks that the UE is registered.

As shown in Fig. 7, if the GGSN receives a SIP message (communication 1 in Fig. 7) and does not have an active PDP context with the IP address indicated in the SIP message (block 2 in Fig. 7), then the GGSN sends an ICMP (Internet Control Message Protocol) message 'Host not reachable' to the node which initiated the SIP message, i.e. to the P-CSCF (communication 3 in Fig. 7).

In block 2 in Fig. 7, the GGSN determines whether or not the IP address indicated in the received SIP message belongs to an active PDP context. If there is no active PDP context with this IP address, the GGSN issues the ICMP message to the P-CSCF.

It is to be noted that a PCF can be connected between the GGSN which may be a 3G-GGSN and the P-CSCF in a manner similar as shown in Fig. 3.

The P-CSCF can then either terminate the session which is under the setup phase or terminate all active sessions or initiate de-registration of the UE (block 4 in Fig. 7).

Session termination requires sending a reject message or a BYE message from the P-CSCF towards the peer. If session termination is performed, a flag may be set in the IM network, e.g. in the P-CSCF or S-CSCF, to indicate that the UE is not anymore available for MT SIP messages. The UE is thus kept registered, but no MT SIP messages are sent to the UE before the UE becomes available again. The IM network knows that the UE is available again e.g. when the UE performs re-registration. If the UE is able to perform re-registration, it has an active PDP context to carry SIP messages. Thus, e.g. at re-registration, the flag in the IM network can be removed. This also indicates that if the UE has lost all its PDP contexts, it should perform re-registration immediately when getting an active PDP context.

It is to be noted that a flag indicating that the user equipment is not available for user equipment terminated messages may be set not only when session termination is performed. For example, such flag may be set when a message is received which indicates that there is no active PDP context with the specific IP address.

De-registration may require sending a SIP message from the P-CSCF to the S-CSCF, e.g. a 480 Temporarily Unavailable message with an indication to perform de-registration, and It would be good to know in the IM network if the UE has become unavailable. This way, SIP messages would not be sent to such a UE, because the UE is not able to receive them.

Though the invention is described referring to GPRS as the wireless access network, the principles of the invention can be applied also to other wireless networks.

According to one aspect, a communication network system comprising at least one first network (GPRS) and at least one second network providing application services over the first network is described. The first network allocates an IP address used by the second network. The system comprises means for detecting that the IP address allocated to a user equipment is de-allocated by the first network and means for initiating a de-registration of the de-allocated IP address in the second network.

While the invention has been described with reference to a preferred embodiment, the description is illustrative of the invention and is not to be construed as limiting the invention. Various modifications and applications may occur to those skilled in the art without departing from the scope of the invention as defined by the appended claims.

## Claims

1. A communication network system comprising at least one first network (GPRS) and at least one second network (IMS) providing application services over the first network, the first network allocating an IP address used by the second network, said system comprising:
first network means (GGSN) for receiving a message associated with an IP address allocated by the first network from the second network,
**characterized in that**
said first network means (GGSN) is arranged to detect that there is no active communication channel for said IP address which is allocated to a user equipment, and send an indication that the user equipment is not reachable through said IP address to the second network, and said system further comprises
second network means (P-CSCF, PCF) for receiving said indication.

2. A system according to claim 1, wherein said message comprises the IP address.

3. A system according to claim 1 or 2, wherein the second network comprises means for inhibiting sending further messages to the unreachable user equipment upon receiving the user equipment not reachable indication sent from the first network means.

4. A system according to claim 1 or 2, wherein the second network means, upon receiving the user equipment not reachable indication, are arranged to terminate the invited session by sending a reject message to a peer entity.

5. A system according to claim 1 or 2, wherein the second network means, upon receiving the user equipment not reachable indication, are arranged to terminate all active sessions.

6. A system according to claim 3 or 5, wherein the second network means, upon receiving the user equipment not reachable indication, are arranged to set a flag indicating that the user equipment is not available for user equipment terminated messages.

7. A system according to claim 6, wherein the second network means are arranged to remove the flag when the user equipment performs re-registration towards the second network.

8. A system according to claim 1, wherein the second network means, upon receiving the user equipment not reachable indication, are arranged to initiate a de-registration of the user equipment in the second network.

9. A system according to claim 8, wherein the second network means, for initiating the de-registration, are arranged to send a message with an indication to perform de-registration to a serving network node (S-CSCF) in the second network.

10. A system according to claim 8, wherein the second network means are arranged to initiate the de-registration directly.

11. A system according to any one of the preceding claims, wherein the first network means are arranged to send the user equipment is not reachable indication to the node in the second network, which initiated said message.

12. A system according to any one of the preceding claims, wherein the user equipment is not reachable indication is an ICMP message.

13. A system according to any one of the preceding claims, wherein the first network is a wireless access network.

14. A system according to any one of the preceding claims, wherein the second network is an IP multimedia network.

15. A system according to any one of the preceding claims, wherein the communication channel is a PDP context.

16. A method of providing communication between at least one first network (GPRS) and at least one second network (IMS) providing application services over the first network, the first network allocating an IP address used by the second network, said method comprising:
receiving a message associated with an IP address allocated by the first network from the second network in first network means,
**characterized by**:
detecting in the first network means that there is no active communication channel for said IP address which is allocated to a user equipment;
sending an indication that the user equipment is not reachable through said IP address from the first network means to the second network; and
receiving said indication by the second network means.

17. A method according to claim 16, wherein said message comprises the IP address.

18. A method according to claim 16 or 17, further comprising the step of inhibiting, by the second network means, sending further messages to the unreachable user equipment upon receiving the user equipment not reachable indication sent from the first network means.

19. A method according to claim 16 or 17, upon receiving the user equipment not reachable indication, comprising the step of terminating the invited session by sending a reject message from the second network means to a peer entity.

20. A method according to claim 16 or 17, upon receiving the user equipment not reachable indication, comprising the step of terminating all active sessions.

21. A method according to claim 18 or 20, upon receiving the user equipment not reachable indication, further comprising the step of setting a flag in the second network, which indicates that the user equipment is not available for user equipment terminated messages.

22. A method according to claim 21, wherein the flag is set in the second network means.

23. A method according to claim 21, wherein the flag is set in a serving network node.

24. A method according to claim 21, wherein the flag is removed when the user equipment performs re-registration towards the second network.

25. A method according to claim 16, upon receiving the user equipment not reachable indication, comprising the step of initiating a de-registration of the user equipment in the second network.

26. A method according to claim 25, wherein the initiating step comprises the step of sending a message with an indication to perform de-registration to a serving network node (S-CSCF) in the second network.

27. A method according to claim 25, wherein the de-registration is performed by the second network means directly.

28. First network means of a first network in a communication network system comprising at least one first network (GPRS) and at least one second network (IMS) providing application services over the first network, the first network allocating an IP address used by the second network, said first network means being arranged to:
receive a message associated with an IP address allocated by the first network from the second network,
**characterized in that** said first network means is arranged to:
detect that there is no active communication channel for said IP address which is allocated to a user equipment; and
send an indication that the user equipment is not reachable through said IP address to the second network.

29. Second network means of a second network in a communication network system comprising at least one first network (GPRS) and at least one second network (IMS) providing application services over the first network, the first network allocating an IP address used by the second network, said second network means being arranged to:
send a message associated with an IP address which is allocated to a user equipment to the first network,
**characterized in that** said second network means is arranged to:
receive an indication that a user equipment is not reachable through an IP address, which indication is sent from the first network.

30. A communication network system comprising at least one first network (GPRS) and at least one second network providing application services over the first network, the first network allocating an IP address used by the second network, said system being **characterized by** comprising:
means for detecting that the IP address allocated to a user equipment is de-allocated by the first network; and
means for initiating a de-registration of the de-allocated IP address in the second network.

31. A system according to claim 30, further comprising a control entity (PCF) being arranged to communicate with a gating network element (GGSN) in the first network and a dedicated call serving network element (CSCF) in the second network, the dedicated call serving network element serving the requested application,
wherein the gating network element detects a communication channel deactivation, and informs the control entity thereof,
wherein the control entity detects that the deactivated communication channel represents a signaling PDP context and initiates the de-registration in the dedicated call serving network element.

32. A system according to claim 31, wherein the gating network element supplies an indication of the signaling PDP context to the control entity.

33. A system according to claim 31, wherein the control entity detects that the deactivated communication channel represents a signaling PDP context by checking request state information in the control entity.

34. A system according to claim 31, wherein the gating network element is informed by a serving network element in the first network about a communication channel deactivation and forwards this information to the control entity.

35. A system according to claim 30, wherein a network element in the first network detects the de-allocation of the IP address and informs a server about the de-allocation, and the server initiates de-registration in call serving network elements in the second network, to which said IP-address is associated with.

36. A system according to claim 35, wherein the server is a home subscriber server (HSS).

37. A system according to claim 35, wherein a network element (SGSN) in the first network informs a database (HLR) about the de-allocation, the home database informs a mobility serving entity (UMS) about the de-allocation, and the mobility serving entity initiates the de-registration in a dedicated call serving network element (CSCF) in the second network, the dedicated call serving network element serving the requested application.

38. A system according to claim 35, wherein the network element in the first network detects a detach of the user equipment causing the de-allocation for all IP addresses of the user equipment and informs the server about the de-allocation, and the server initiates de-registration in all call serving network elements of the user equipment.

39. A system according to claim 35, wherein a gating network element (GGSN) in the first network stores addresses of call serving network elements proposed to the user equipment against the allocated IP address and a user identification, the gating network element allocating the IP address and being involved in the discovery procedure of a call serving network element (CSCF) in the second network, the call serving network elements being able to serve the requested application, and, when the gating network element detects the de-allocation of the IP address, it initiates de-registration in all stored call serving network elements associated with the IP addresses in the second network.

40. A system according to claim 35, wherein the user equipment informs a gating network element (GGSN) in the first network whenever it registers with a call serving network element (CSCF) in the second network, the gating network element allocating the IP address and being involved in the discovery procedure of a call serving network element (CSCF) in the second network, the call serving network elements being able to serve the requested application, wherein the gating network element stores addresses of the registered call serving network elements against the allocated IP addresses and a user identification, and, when the gating network element detects the de-allocation of the IP addresses, it initiates the de-registration in all stored call serving network nodes associated with the IP addresses.

41. A system according to claim 35, wherein a de-allocation of the IP address caused by a communication channel deactivation is detected by a gating network element in the first network, and the server is informed by the gating network element about the de-allocation.

42. A system according to claim 35, wherein a de-allocation of the IP address caused by a detach of the user equipment is detected by a serving network element (SGSN) in the first network, and the home server is informed by the serving network element about the de-allocation.

43. A system according to claim 35, wherein the server is informed by the user equipment about all call serving network elements the user equipment is registered with.

44. A system according to claim 30, wherein the IP address is de-registered in the second network by deleting a record in a home server (HSS) in the first network by a call serving network element in the second network.

45. A system according to claim 30, wherein an IP address is allocated for each communication channel request performed by the user equipment.

46. A system according to any one of claims 30 to 45, wherein the initiation of the de-registration comprises the supply of a de-register message.

47. A system according to any one of claims 30 to 46, wherein the first network is a wireless access network.

48. A system according to any one of claims 30 to 47, wherein the second network is an IP multimedia network.

49. A system according to any one of claims 30 to 48, wherein the communication channel is a PDP context.

50. A control entity which is arranged to communicate with a gating network element (GGSN) in a first network and a dedicated call serving network element (CSCF) in a second network providing application services over the first network, the first network allocating an IP address used by the second network, the dedicated call serving network element serving the requested application,
**characterized in that**
the control entity receives information from the gating network element about a communication channel deactivation,
wherein the control entity detects that the deactivated communication channel represents a signaling PDP context and initiates the de-registration in the dedicated call serving network element.

51. A method of providing communication between at least one first network (GPRS) and at least one second network providing application services over the first network, the first network allocating an IP address used by the second network, said method being **characterized by** comprising:
detecting that the IP address allocated to a user equipment is de-allocated by the first network; and
initiating a de-registration of the de-allocated IP address in the second network.

52. A method according to claim 51, further comprising the step of:
providing a control entity (PCF) being arranged to communicate with a gating network element (GGSN) in the first network and a dedicated call serving network element (CSCF) in the second network, the dedicated call serving network element serving the requested application,
detects a communication channel deactivation by the gating network element and informing the control entity thereof,
wherein when it is detected by the control entity that the deactivated communication channel represents a signaling PDP context, the de-registration in the dedicated call serving network element is initiated.

53. A method according to claim 52, wherein an indication of the signaling PDP context is supplied to the control entity by the gating network element.

54. A method according to claim 52, wherein it is detected by the control entity that the deactivated communication channel represents a signaling PDP context by checking request state information in the control entity.

55. A method according to claim 52, wherein the gating network element is informed by a serving network element in the first network about a communication channel deactivation and this information is forwarded to the control entity.

56. A method according to claim 51, wherein the de-allocation of the IP address is detected by a network element in the first network and a server is informed about the de-allocation, and de-registration is initiated in call serving network elements in the second network, to which said IP-address is associated with.

57. A method according to claim 56, wherein the server is a home subscriber server (HSS).

58. A method according to claim 56, wherein a database (HLR)is informed by a network element (SGSN) in the first network about the de-allocation, a mobility serving entity (UMS) is informed by the home database about the de-allocation, and the de-registration is initiated by the mobility serving entity in a dedicated call serving network element (CSCF) in the second network, the dedicated call serving network element serving the requested application.

59. A method according to claim 56, wherein a detach of the user equipment causing the de-allocation for all IP addresses of the user equipment is detected by the network element in the first network and the server is informed about the de-allocation by the network element, and de-registration in all call serving network elements of the user equipment is initiated by the server.

60. A method according to claim 56, wherein addresses of call serving network elements proposed to the user equipment against the allocated IP address and a user identification are stored in a gating network element (GGSN) in the first network, the gating network element allocating the IP address and being involved in the discovery procedure of a call serving network element (CSCF) in the second network, the call serving network elements being able to serve the requested application, and, when the gating network element detects the de-allocation of the IP address, de-registration in all stored call serving network elements associated with the IP addresses in the second network is initiated by the gating network element.

61. A method according to claim 56, wherein a gating network element (GGSN) in the first network is informed by the user equipment whenever it registers with a call serving network element (CSCF) in the second network, the gating network element allocating the IP address and being involved in the discovery procedure of a call serving network element (CSCF) in the second network, the call serving network elements being able to serve the requested application, wherein the gating network element stores addresses of the registered call serving network elements against the allocated IP addresses and a user identification, and, when the gating network element detects the de-allocation of the IP addresses, it initiates the de-registration in all stored call serving network nodes associated with the IP addresses.

62. A method according to claim 56, wherein a de-allocation of the IP address caused by a communication channel deactivation is detected by a gating network element in the first network, and the server is informed by the gating network element about the de-allocation.

63. A method according to claim 56, wherein a de-allocation of the IP address caused by a detach of the user equipment is detected by a serving network element (SGSN) in the first network, and the home server is informed by the serving network element about the de-allocation.

64. A method according to claim 56, wherein the server is informed by the user equipment about all call serving network elements the user equipment is registered with.

65. A method according to claim 51, wherein the IP address is de-registered in the second network by deleting a record in a home server (HSS) in the first network by a call serving network element in the second network.

66. A method according to claim 51, wherein an IP address is allocated for each communication channel request performed by the user equipment.

67. A method according to any one of claims 51 to 66, wherein the initiation of the de-registration comprises the supply of a de-register message.

68. A method according to any one of claims 51 to 67, wherein the first network is a wireless access network.

69. A method according to any one of claims 51 to 68, wherein the second network is an IP multimedia network.

70. A method according to any one of claims 51 to 69, wherein the communication channel is a PDP context.

## Patentansprüche

1. Kommunikationsnetzwerksystem mit zumindest einem ersten Netzwerk (GPRS) und zumindest einem zweiten Netzwerk (IMS), das Anwendungsdienste über das erste Netzwerk bereitstellt, wobei das erste Netzwerk eine durch das zweite Netzwerk verwendete IP-Adresse zuweist, mit
einer ersten Netzwerkeinrichtung (GGSN) zum Empfangen einer Nachricht von dem zweiten Netzwerk, die mit einer durch das erste Netzwerk zugewiesenen IP-Adresse assoziiert ist,
**dadurch gekennzeichnet, dass**
die erste Netzwerkeinrichtung (GGSN) zur Erfassung, dass es keinen aktiven Kommunikationskanal für die IP-Adresse gibt, die einer Benutzereinrichtung zugewiesen ist, und Senden einer Angabe zu dem zweiten Netzwerk eingerichtet ist, dass die Benutzereinrichtung über die IP-Adresse nicht erreichbar ist, und das System ferner
eine zweite Netzwerkeinrichtung (P-CSCF, PCF) zum Empfangen der Angabe umfasst.

2. System nach Anspruch 1, wobei die Nachricht die IP-Adresse umfasst.

3. System nach Anspruch 1 oder 2, wobei das zweite Netzwerk eine Einrichtung zum Verhindern des Sendens weiterer Nachrichten zu der nicht erreichbaren Benutzereinrichtung beim Empfang der von der ersten Netzwerkeinrichtung gesendeten Angabe umfasst, dass die Benutzereinrichtung nicht erreichbar ist.

4. System nach Anspruch 1 oder 2, wobei die zweite Netzwerkeinrichtung beim Empfang der Angabe, dass die Benutzereinrichtung nicht erreichbar ist, zum Beenden der aufgeforderten Sitzung durch Senden einer Ablehnnachricht zu einer Peer-Einrichtung eingerichtet ist.

5. System nach Anspruch 1 oder 2, wobei die zweite Netzwerkeinrichtung beim Empfang der Angabe, dass die Benutzereinrichtung nicht erreichbar ist, zum Beenden aller aktiven Sitzungen eingerichtet ist.

6. System nach Anspruch 3 oder 5, wobei die zweite Netzwerkeinrichtung beim Empfang der Angabe, dass die Benutzereinrichtung nicht erreichbar ist, zum Setzen eines Flags für benutzereinrichtungsterminierte Nachrichten eingerichtet ist, das angibt, dass die Benutzereinrichtung nicht verfügbar ist.

7. System nach Anspruch 6, wobei die zweite Netzwerkeinrichtung zum Entfernen des Flags eingerichtet ist, wenn die Benutzereinrichtung eine Neuregistrierung in Richtung des zweiten Netzwerks durchführt.

8. System nach Anspruch 1, wobei die zweite Netzwerkeinrichtung beim Empfang der Angabe, dass die Benutzereinrichtung nicht erreichbar ist, zum Initiieren einer Deregistrierung der Benutzereinrichtung in dem zweiten Netzwerk eingerichtet ist.

9. System nach Anspruch 8, wobei die zweite Netzwerkeinrichtung zum Initiieren der Deregistrierung zum Senden einer Nachricht mit einer Angabe zur Durchführung der Deregistrierung zu einem Betreuungsnetzwerkknoten (S-CSCF) in dem zweiten Netzwerk eingerichtet ist.

10. System nach Anspruch 8, wobei die zweite Netzwerkeinrichtung zum direkten Initiieren der Deregistrierung eingerichtet ist.

11. System nach einem der vorhergehenden Ansprüche, wobei die erste Netzwerkeinrichtung zum Senden der Angabe, dass die Benutzereinrichtung nicht erreichbar ist, zu dem Knoten in dem zweiten Netzwerk eingerichtet ist, der die Nachricht initiiert hat.

12. System nach einem der vorhergehenden Ansprüche, wobei die Angabe, dass die Benutzereinrichtung nicht erreichbar ist, eine ICMP-Nachricht ist.

13. System nach einem der vorhergehenden Ansprüche, wobei das erste Netzwerk ein Funkzugangsnetzwerk ist.

14. System nach einem der vorhergehenden Ansprüche, wobei das zweite Netzwerk ein IP-Multimedianetzwerk ist.

15. System nach einem der vorhergehenden Ansprüche, wobei der Kommunikationskanal ein PDP-Kontext ist.

16. Verfahren der Bereitstellung einer Kommunikation zwischen zumindest einem ersten Netzwerk (GPRS) und zumindest einem zweiten Netzwerk (IMS), das Anwendungsdienste über das erste Netzwerk bereitstellt, wobei das erste Netzwerk eine durch das zweite Netzwerk verwendete IP-Adresse zuweist, mit
Empfangen einer Nachricht von dem zweiten Netzwerk in der ersten Netzwerkeinrichtung, die mit einer durch das erste Netzwerk zugewiesenen IP-Adresse assoziiert ist,
**gekennzeichnet durch**
Erfassen in der ersten Netzwerkeinrichtung, dass es keinen aktiven Kommunikationskanal für die IP-Adresse gibt, die einer Benutzereinrichtung zugewiesen ist,
Senden einer Angabe, dass die Benutzereinrichtung über die IP-Adresse nicht erreichbar ist, von der ersten Netzwerkeinrichtung zu dem zweiten Netzwerk und
Empfangen der Angabe **durch** die zweite Netzwerkeinrichtung.

17. Verfahren nach Anspruch 16, wobei die Nachricht die IP-Adresse umfasst.

18. Verfahren nach Anspruch 16 oder 17, ferner mit dem Schritt des Verhinderns des Sendens weiterer Nachrichten zu der nicht erreichbaren Benutzereinrichtung durch die zweite Netzwerkeinrichtung beim Empfang der von der ersten Netzwerkeinrichtung gesendeten Angabe, dass die Benutzereinrichtung nicht erreichbar ist.

19. Verfahren nach Anspruch 16 oder 17, mit dem Schritt des Beendens der angeforderten Sitzung beim Empfang der Angabe, dass die Benutzereinrichtung nicht erreichbar ist, durch Senden einer Ablehnnachricht von der zweiten Netzwerkeinrichtung zu einer Peer-Einrichtung.

20. Verfahren nach Anspruch 16 oder 17, mit dem Schritt des Beendens aller aktiven Sitzungen beim Empfang der Angabe, dass die Benutzereinrichtung nicht erreichbar ist.

21. Verfahren nach Anspruch 18 oder 20, ferner mit dem Schritt des Setzens eines Flags in dem zweiten Netzwerk beim Empfang der Angabe, dass die Benutzereinrichtung nicht erreichbar ist, das angibt, dass die Benutzereinrichtung für benutzereinrichtungsterminierte Nachrichten nicht verfügbar ist.

22. Verfahren nach Anspruch 21, wobei das Flag in der zweiten Netzwerkeinrichtung gesetzt wird.

23. Verfahren nach Anspruch 21, wobei das Flag in einem Betreuungsnetzwerkknoten gesetzt wird.

24. Verfahren nach Anspruch 21, wobei das Flag entfernt wird, wenn die Benutzereinrichtung eine Neuregistrierung in Richtung des zweiten Netzwerks durchführt.

25. Verfahren nach Anspruch 16, mit dem Schritt des Initiierens einer Deregistrierung der Benutzereinrichtung in dem zweiten Netzwerk beim Empfang der Angabe, dass die Benutzereinrichtung nicht erreichbar ist.

26. Verfahren nach Anspruch 25, wobei der Initiierungsschritt den Schritt des Sendens einer Nachricht mit einer Angabe zur Durchführung der Deregistrierung zu einem Betreuungsnetzwerkknoten (S-CSCF) in dem zweiten Netzwerk umfasst.

27. Verfahren nach Anspruch 25, wobei die Deregistrierung durch die zweite Netzwerkeinrichtung direkt durchgeführt wird.

28. Erste Netzwerkeinrichtung eines ersten Netzwerks in einem Kommunikationsnetzwerksystem mit zumindest einem ersten Netzwerk (GPRS) und zumindest einem zweiten Netzwerk (IMS), das Anwendungsdienste über das erste Netzwerk bereitstellt, wobei das erste Netzwerk eine durch das zweite Netzwerk verwendete IP-Adresse zuweist, wobei die erste Netzwerkeinrichtung dazu eingerichtet ist,
eine Nachricht von dem zweiten Netzwerk zu empfangen, die mit einer durch das erste Netzwerk zugewiesenen IP-Adresse assoziiert ist,
**dadurch gekennzeichnet, dass** die erste Netzwerkeinrichtung dazu eingerichtet ist,
zu erfassen, dass es keinen aktiven Kommunikationskanal für die IP-Adresse gibt, die einer Benutzereinrichtung zugewiesen ist, und
eine Angabe zu dem zweiten Netzwerk zu senden, dass die Benutzereinrichtung über die IP-Adresse nicht erreichbar ist.

29. Zweite Netzwerkeinrichtung eines zweiten Netzwerks in einem Kommunikationsnetzwerksystem mit zumindest einem ersten Netzwerk (GPRS) und zumindest einem zweiten Netzwerk (IMS), das Anwendungsdienste über das erste Netzwerk bereitstellt, wobei das erste Netzwerk eine durch das zweite Netzwerk verwendete IP-Adresse zuweist, wobei die zweite Netzwerkeinrichtung dazu eingerichtet ist,
eine Nachricht zu dem ersten Netzwerk zu senden, die mit einer IP-Adresse assoziiert ist, die einer Benutzereinrichtung zugewiesen ist,
**dadurch gekennzeichnet, dass** die zweite Netzwerkeinrichtung dazu eingerichtet ist,
eine Angabe zu empfangen, dass eine Benutzereinrichtung über eine IP-Adresse nicht erreichbar ist, wobei die Angabe von dem ersten Netzwerk gesendet wird.

30. Kommunikationsnetzwerksystem mit zumindest einem ersten Netzwerk (GPRS) und zumindest einem zweiten Netzwerk, das Anwendungsdienste über das erste Netzwerk bereitstellt, wobei das erste Netzwerk eine durch das zweite Netzwerk verwendete IP-Adresse zuweist, **gekennzeichnet durch**
eine Einrichtung zur Erfassung, dass die einer Benutzereinrichtung zugewiesene IP-Adresse **durch** das erste Netzwerk freigegeben ist, und
eine Einrichtung zum Initiieren einer Deregistrierung der freigegebenen IP-Adresse in dem zweiten Netzwerk.

31. System nach Anspruch 30, ferner mit einer Steuereinrichtung (PCF) zur Kommunikation mit einem Schleusennetzwerkelement (GGSN) in dem ersten Netzwerk und einem dedizierten Rufdienstnetzwerkelement (CSCF) in dem zweiten Netzwerk, wobei das dedizierte Rufdienstnetzwerkelement die angefragte Anwendung betreut,
wobei das Schleusennetzwerkelement eine Kommunikationskanaldeaktivierung erfasst und die Steuereinrichtung darüber informiert,
wobei die Steuereinrichtung erfasst, dass der deaktivierte Kommunikationskanal einen Signalisierungs-PDP-Kontext darstellt und die Deregistrierung in dem dedizierten Rufdienstnetzwerkelement initiiert.

32. System nach Anspruch 31, wobei das Schleusennetzwerkelement der Steuereinrichtung eine Angabe des Signalisierungs-PDP-Kontexts zuführt.

33. System nach Anspruch 31, wobei die Steuereinrichtung erfasst, dass der deaktivierte Kommunikationskanal einen Signalisierungs-PDP-Kontext darstellt, indem Anfragezustandsinformationen in der Steuereinrichtung überprüft werden.

34. System nach Anspruch 31, wobei das Schleusennetzwerkelement durch ein Betreuungsnetzwerkelement in dem ersten Netzwerk über eine Kommunikationskanaldeaktivierung informiert wird und diese Informationen zu der Steuereinrichtung weiterleitet.

35. System nach Anspruch 30, wobei ein Netzwerkelement in dem ersten Netzwerk die Freigabe der IP-Adresse erfasst und einen Server über die Freigabe informiert, und der Server eine Deregistrierung in Rufdienstnetzwerkelementen in dem zweiten Netzwerk initiiert, mit denen die IP-Adresse assoziiert ist.

36. System nach Anspruch 35, wobei der Server ein Heimatteilnehmerserver (HSS) ist.

37. System nach Anspruch 35, wobei ein Netzwerkelement (SGSN) in dem ersten Netzwerk eine Datenbank (HLR) über die Freigabe informiert, die Heimatdatenbank eine Mobilitätsbetreuungseinrichtung (UMS) über die Freigabe informiert, und die Mobilitätsbetreuungseinrichtung die Deregistrierung in einem dedizierten Rufdienstnetzwerkelement (CSCF) in dem zweiten Netzwerk initiiert, wobei das dedizierte Rufdienstnetzwerkelement die angefragte Anwendung betreut.

38. System nach Anspruch 35, wobei das Netzwerkelement in dem ersten Netzwerk eine Trennung der Benutzereinrichtung erfasst, die die Freigabe für alle IP-Adressen der Benutzereinrichtung verursacht, und den Server über die Freigabe informiert, und der Server eine Deregistrierung in allen Rufdienstnetzwerkelementen der Benutzereinrichtung initiiert.

39. System nach Anspruch 35, wobei ein Schleusennetzwerkelement (GGSN) in dem ersten Netzwerk Adressen von Rufdienstnetzwerkelementen, die der Benutzereinrichtung vorgeschlagen werden, gegenüber der zugewiesenen IP-Adresse und einer Benutzeridentifizierung speichert, wobei das Schleusennetzwerkelement die IP-Adresse zuweist und in die Suchprozedur eines Rufdienstnetzwerkelements (CSCF) in dem zweiten Netzwerk involviert ist, wobei die Rufdienstnetzwerkelemente die angefragte Anwendung beteuen können, und wobei das Schleusennetzwerkelement, wenn es die Freigabe der IP-Adresse erfasst, die Deregistrierung in allen gespeicherten Rufdienstnetzwerkelementen initiiert, die mit den IP-Adressen in dem zweiten Netzwerk assoziiert sind.

40. System nach Anspruch 35, wobei die Benutzereinrichtung ein Schleusennetzwerkelement (GGSN) in dem ersten Netzwerk immer dann informiert, wenn es sich mit einem Rufdienstnetzwerkelement (CSCF) in dem zweiten Netzwerk registriert, wobei das Schleusennetzwerkelement die IP-Adresse zuweist und in die Suchprozedur eines Rufdienstnetzwerkelements (CSCF) in dem zweiten Netzwerk involviert ist, wobei die Rufdienstnetzwerkelemente die angefragte Anwendung bedienen können, wobei das Schleusennetzwerkelement Adressen der registrierten Rufdienstnetzwerkelemente gegenüber den zugewiesenen IP-Adressen und einer Benutzeridentifizierung speichert, und wobei das Schleusennetzwerkelement, wenn es die Freigabe der IP-Adressen erfasst, die Deregistrierung in allen gespeicherten Rufdienstnetzwerkknoten initiiert, die mit den IP-Adressen assoziiert sind.

41. System nach Anspruch 35, wobei eine durch eine Kommunikationskanaldeaktivierung verursachte Freigabe der IP-Adresse durch ein Schleusennetzwerkelement in dem ersten Netzwerk erfasst wird, und der Server durch das Schleusennetzwerkelement über die Freigabe informiert wird.

42. System nach Anspruch 35, wobei eine durch eine Trennung der Benutzereinrichtung verursachte Freigabe der IP-Adresse durch ein Betreuungsnetzwerkelement (SGSN) in dem ersten Netzwerk erfasst wird, und der Heimatserver durch das Betreuungsnetzwerkelement über die Freigabe informiert wird.

43. System nach Anspruch 35, wobei der Server durch die Benutzereinrichtung über alle Rufdienstnetzwerkelemente informiert wird, mit denen die Benutzereinrichtung registriert ist.

44. System nach Anspruch 30, wobei die IP-Adresse in dem zweiten Netzwerk durch Löschen eines Datensatzes in einem Heimatserver (HSS) in dem ersten Netzwerk durch ein Rufdienstnetzwerkelement in dem zweiten Netzwerk deregistriert wird.

45. System nach Anspruch 30, wobei eine IP-Adresse für jede durch die Benutzereinrichtung durchgeführte Kommunikationskanalanfrage zugewiesen wird.

46. System nach einem der Ansprüche 30 bis 45, wobei die Initiierung der Deregistrierung das Zuführen einer Deregistriernachricht umfasst.

47. System nach einem der Ansprüche 30 bis 46, wobei das erste Netzwerk ein Funkzugangsnetzwerk ist.

48. System nach einem der Ansprüche 30 bis 47, wobei das zweite Netzwerk ein IP-Multimedianetzwerk ist.

49. System nach einem der Ansprüche 30 bis 48, wobei der Kommunikationskanal ein PDP-Kontext ist.

50. Steuereinrichtung zur Kommunikation mit einem Schleusennetzwerkelement (GGSN) in einem ersten Netzwerk und einem dedizierten Rufdienstnetzwerkelement (CSCF) in einem zweiten Netzwerk, das Anwendungsdienste über das erste Netzwerk bereitstellt, wobei das erste Netzwerk eine durch das zweite Netzwerk verwendete IP-Adresse zuweist, und wobei das dedizierte Rufdienstnetzwerkelement die angefragte Anwendung betreut,
**dadurch gekennzeichnet, dass**
die Steuereinrichtung Informationen über eine Kommunikationskanaldeaktivierung von dem Schleusennetzwerkelement empfängt,
wobei die Steuereinrichtung erfasst, dass der deaktivierte Kommunikationskanal einen Signalisierungs-PDP-Kontext darstellt, und die Deregistrierung in dem dedizierten Rufdienstnetzwerkelement initiiert.

51. Verfahren der Bereitstellung einer Kommunikation zwischen zumindest einem ersten Netzwerk (GPRS) und zumindest einem zweiten Netzwerk, das Anwendungsdienste über das erste Netzwerk bereitstellt, wobei das erste Netzwerk eine von dem zweiten Netzwerk verwendete IP-Adresse zuweist, **gekennzeichnet durch**
Erfassen **durch** das erste Netzwerk, dass die einer Benutzereinrichtung zugewiesene IP-Adresse freigegeben ist, und
Initiieren einer Deregistrierung der freigegebenen IP-Adresse in dem zweiten Netzwerk.

52. Verfahren nach Anspruch 51, ferner mit dem Schritt
Bereitstellen einer Steuereinrichtung (PCF) zur Kommunikation mit einem Schleusennetzwerkelement (GGSN) in dem ersten Netzwerk und einem dedizierten Rufdienstnetzwerkelement (CSCF) in dem zweiten Netzwerk, wobei das dedizierte Rufdienstnetzwerkelement die angefragte Anwendung betreut,
Erfassen einer Kommunikationskanaldeaktivierung durch das Schleusennetzwerkelement und Informieren der Steuereinrichtung darüber,
wobei die Deregistrierung in dem dedizierten Rufdienstnetzwerkelement initiiert wird, wenn durch die Steuereinrichtung erfasst wird, dass der deaktivierte Kommunikationskanal einen Signalisierungs-PDP-Kontext darstellt.

53. Verfahren nach Anspruch 52, wobei eine Angabe des Signalisierungs-PDP-Kontextes durch das Schleusennetzwerkelement zu der Steuereinrichtung geführt wird.

54. Verfahren nach Anspruch 52, wobei durch die Steuereinrichtung erfasst wird, dass der deaktivierte Kommunikationskanal einen Signalisierungs-PDP-Kontext darstellt, indem Anfragezustandsinformationen in der Steuereinrichtung überprüft werden.

55. Verfahren nach Anspruch 52, wobei das Schleusennetzwerkelement von einem Betreuungsnetzwerkelement in dem ersten Netzwerk über eine Kommunikationskanaldeaktivierung informiert wird und diese Informationen zu der Steuereinrichtung weitergeleitet werden.

56. Verfahren nach Anspruch 51, wobei die Freigabe der IP-Adresse durch ein Netzwerkelement in dem ersten Netzwerk erfasst wird, und ein Server über die Freigabe informiert wird, und die Deregistrierung in Rufdienstnetzwerkelementen in dem zweiten Netzwerk initiiert wird, mit denen die IP-Adresse assoziiert ist.

57. Verfahren nach Anspruch 56, wobei der Server ein Heimatteilnehmerserver (HSS) ist.

58. Verfahren nach Anspruch 56, wobei eine Datenbank (HLR) durch ein Netzwerkelement (SGSN) in dem ersten Netzwerk über die Freigabe informiert wird, eine Mobilitätsbetreuungseinrichtung (UMS) durch die Heimatdatenbank über die Freigabe informiert wird, und die Deregistrierung durch die Mobilitätsbetreuungseinrichtung in einem dedizierten Rufdienstnetzwerkelement (CSCF) in dem zweiten Netzwerk initiiert wird, wobei das dedizierte Rufdienstnetzwerkelement die angefragte Anwendung betreut.

59. Verfahren nach Anspruch 56, wobei eine die Freigabe für alle IP-Adressen der Benutzereinrichtung verursachende Trennung der Benutzereinrichtung durch das Netzwerkelement in dem ersten Netzwerk erfasst wird, und der Server über die Freigabe durch das Netzwerkelement informiert wird, und die Deregistrierung in allen Rufdienstnetzwerkelementen der Benutzereinrichtung durch den Server initiiert wird.

60. Verfahren nach Anspruch 56, wobei Adressen von der Benutzereinrichtung vorgeschlagenen Rufdienstnetzwerkelementen gegenüber der zugewiesenen IP-Adresse und einer Benutzeridentifizierung in einem Schleusennetzwerkelement (GGSN) in dem ersten Netzwerk gespeichert sind, wobei das Schleusennetzwerkelement die IP-Adresse zuweist und in die Suchprozedur eines Rufdienstnetzwerkelements (CSCF) in dem zweiten Netzwerk involviert ist, wobei die Rufdienstnetzwerkelemente die angefragte Anwendung betreuen können, und die Deregistrierung in allen mit den IP-Adressen assoziierten gespeicherten Rufdienstnetzwerkelementen in dem zweiten Netzwerk durch das Schleusennetzwerkelement initiiert wird, wenn das Schleusennetzwerkelement die Freigabe der IP-Adresse erfasst.

61. Verfahren nach Anspruch 56, wobei ein Schleusennetzwerkelement (GGSN) in dem ersten Netzwerk von der Benutzereinrichtung immer dann informiert wird, wenn sie sich mit einem Rufdienstnetzwerkelement (CSCF) in dem zweiten Netzwerk registriert, wobei das Schleusennetzwerkelement die IP-Adresse zuweist und in die Suchprozedur eines Rufdienstnetzwerkelements (CSCF) in dem zweiten Netzwerk involviert ist, wobei die Rufdienstnetzwerkelemente die angefragte Anwendung betreuen können, wobei das Schleusennetzwerkelement Adressen der registrierten Rufdienstnetzwerkelemente gegenüber den zugewiesenen IP-Adressen und einer Benutzeridentifizierung speichert, und wobei das Schleusennetzwerkelement, wenn es die Freigabe der IP-Adressen erfasst, die Deregistrierung in allen mit den IP-Adressen assoziierten gespeicherten Rufdienstnetzwerkknoten initiiert.

62. Verfahren nach Anspruch 56, wobei eine durch eine Kommunikationskanaldeaktivierung verursachte Freigabe der IP-Adresse durch ein Schleusennetzwerkelement in dem ersten Netzwerk erfasst wird, und der Server durch das Schleusennetzwerkelement über die Freigabe informiert wird.

63. Verfahren nach Anspruch 56, wobei eine durch eine Trennung der Benutzereinrichtung verursachte Freigabe der IP-Adresse durch ein Betreuungsnetzwerkelement (SGSN) in dem ersten Netzwerk erfasst wird, und der Heimatserver durch das Betreuungsnetzwerkelement über die Freigabe informiert wird.

64. Verfahren nach Anspruch 56, wobei der Server durch die Benutzereinrichtung über alle Rufdienstnetzwerkelemente informiert wird, mit denen die Benutzereinrichtung registriert ist.

65. Verfahren nach Anspruch 51, wobei die IP-Adresse in dem zweiten Netzwerk durch Löschen eines Datensatzes in einem Heimatserver (HSS) in dem ersten Netzwerk durch ein Rufdienstnetzwerkelement in dem zweiten Netzwerk deregistriert wird.

66. Verfahren nach Anspruch 51, wobei eine IP-Adresse für jede durch die Benutzereinrichtung durchgeführte Kommunikationskanalanfrage zugewiesen wird.

67. Verfahren nach einem der Ansprüche 51 bis 66, wobei die Initiierung der Deregistrierung das Zuführen einer Deregistriernachricht umfasst.

68. Verfahren nach einem der Ansprüche 51 bis 67, wobei das erste Netzwerk ein Funkzugangsnetzwerk ist.

69. Verfahren nach einem der Ansprüche 51 bis 68, wobei das zweite Netzwerk ein IP-Multimedianetzwerk ist.

70. Verfahren nach einem der Ansprüche 51 bis 69, wobei der Kommunikationskanal ein PDP-Kontext ist.

## Revendications

1. Système de réseau de communication comprenant au moins un premier réseau (GPRS) et au moins un deuxième réseau (IMS) fournissant des services d'application sur le premier réseau, le premier réseau attribuant une adresse IP utilisée par le deuxième réseau, ledit système comprenant :
des moyens de premier réseau (GGSN) pour recevoir, du deuxième réseau, un message associé à une adresse IP attribuée par le premier réseau,
**caractérisé en ce que**
lesdits moyens de premier réseau (GGSN) sont agencés pour détecter qu'il n'y a aucun canal de communication actif pour ladite adresse IP qui est attribuée à un équipement d'utilisateur, et envoyer une indication du fait que l'équipement d'utilisateur n'est pas joignable par l'intermédiaire de ladite adresse IP au deuxième réseau, et **en ce que** ledit système comprend en outre :
des moyens de deuxième réseau (P-CSCF, PCF) pour recevoir ladite indication.

2. Système selon la revendication 1, dans lequel ledit message comprend l'adresse IP.

3. Système selon la revendication 1 ou 2, dans lequel le deuxième réseau comprend des moyens pour empêcher l'envoi d'autres messages à l'équipement d'utilisateur non joignable lors de la réception de l'indication du fait que l'équipement d'utilisateur n'est pas joignable envoyée par les moyens de premier réseau.

4. Système selon la revendication 1 ou 2, dans lequel les moyens de deuxième réseau, lors de la réception de l'indication du fait que l'équipement d'utilisateur n'est pas joignable, sont agencés pour terminer la session invitée en envoyant un message de rejet à une entité homologue.

5. Système selon la revendication 1 ou 2, dans lequel les moyens de deuxième réseau, lors de la réception de l'indication du fait que l'équipement d'utilisateur n'est pas joignable, sont agencés pour terminer toutes les sessions actives.

6. Système selon la revendication 3 ou 5, dans lequel les moyens de deuxième réseau, lors de la réception de l'indication du fait que l'équipement d'utilisateur n'est pas joignable, sont agencés pour positionner un indicateur indiquant que l'équipement d'utilisateur n'est pas disponible pour des messages destinés à l'équipement d'utilisateur.

7. Système selon la revendication 6, dans lequel les moyens de deuxième réseau sont agencés pour retirer l'indicateur lorsque l'équipement d'utilisateur effectue un nouvel enregistrement vers le deuxième réseau.

8. Système selon la revendication 1, dans lequel les moyens de deuxième réseau, lors de la réception de l'indication du fait que l'équipement d'utilisateur n'est pas joignable, sont agencés pour lancer une annulation d'enregistrement de l'équipement d'utilisateur dans le deuxième réseau.

9. Système selon la revendication 8, dans lequel les moyens de deuxième réseau, pour lancer l'annulation d'enregistrement, sont agencés pour envoyer un message avec une indication pour effectuer une annulation d'enregistrement à un noeud de réseau desservant (S-CSCF) dans le deuxième réseau.

10. Système selon la revendication 8, dans lequel les moyens de deuxième réseau sont agencés pour lancer l'annulation de l'enregistrement directement.

11. Système selon l'une quelconque des revendications précédentes, dans lequel les moyens de premier réseau sont agencés pour envoyer l'indication du fait que l'équipement d'utilisateur n'est pas joignable au noeud dans le deuxième réseau qui a lancé ledit message.

12. Système selon l'une quelconque des revendications précédentes, dans lequel l'indication du fait que l'équipement d'utilisateur n'est pas joignable est un message ICMP.

13. Système selon l'une quelconque des revendications précédentes, dans lequel le premier réseau est un réseau d'accès sans fil.

14. Système selon l'une quelconque des revendications précédentes, dans lequel le deuxième réseau est un réseau multimédia IP.

15. Système selon l'une quelconque des revendications précédentes, dans lequel le canal de communication est un contexte PDP.

16. Procédé pour effectuer une communication entre au moins un premier réseau (GPRS) et au moins un deuxième réseau (IMS) fournissant des services d'application sur le premier réseau, le premier réseau attribuant une adresse IP utilisée par le deuxième réseau, ledit procédé consistant à :
recevoir, du deuxième réseau, un message associé à une adresse IP attribuée par le premier réseau dans des moyens de premier réseau,
**caractérisé par** les étapes consistant à :
détecter, dans les moyens de premier réseau, qu'il n'y a aucun canal de communication actif pour ladite adresse IP qui est attribuée à un équipement d'utilisateur ;
envoyer une indication du fait que l'équipement d'utilisateur n'est pas joignable par l'intermédiaire de ladite adresse IP des moyens de premier réseau au deuxième réseau ; et
recevoir ladite indication par les moyens de deuxième réseau.

17. Procédé selon la revendication 16, dans lequel ledit message comprend l'adresse IP.

18. Procédé selon la revendication 16 ou 17, comprenant en outre l'étape consistant à empêcher, par les moyens de deuxième réseau, l'envoi d'autres messages à l'équipement d'utilisateur non joignable lors de la réception de l'indication du fait que l'équipement d'utilisateur n'est pas joignable envoyée par les moyens de premier réseau.

19. Procédé selon la revendication 16 ou 17, comprenant, lors de la réception de l'indication du fait que l'équipement d'utilisateur n'est pas joignable, l'étape consistant à terminer la session invitée en envoyant un message de rejet à partir des moyens de deuxième réseau vers une entité homologue.

20. Procédé selon la revendication 16 ou 17, comprenant, lors de la réception de l'indication du fait que l'équipement d'utilisateur n'est pas joignable, l'étape consistant à terminer toutes les sessions actives.

21. Procédé selon la revendication 18 ou 20, comprenant en outre, lors de la réception de l'indication du fait que l'équipement d'utilisateur n'est pas joignable, l'étape consistant à positionner un indicateur dans le deuxième réseau, qui indique que l'équipement d'utilisateur n'est pas disponible pour des messages destinés à l'équipement d'utilisateur.

22. Procédé selon la revendication 21, dans lequel l'indicateur est positionné dans les moyens de deuxième réseau.

23. Procédé selon la revendication 21, dans lequel l'indicateur est positionné dans un noeud de réseau desservant.

24. Procédé selon la revendication 21, dans lequel l'indicateur est retiré lorsque l'équipement d'utilisateur effectue un nouvel enregistrement vers le deuxième réseau.

25. Procédé selon la revendication 16, lors de la réception de l'indication du fait que l'équipement d'utilisateur n'est pas joignable, comprenant l'étape consistant à lancer une annulation d'enregistrement de l'équipement d'utilisateur dans le deuxième réseau.

26. Procédé selon la revendication 25, dans lequel l'étape de lancement comprend l'étape d'envoi d'un message avec une indication pour effectuer une annulation d'enregistrement à un noeud de réseau desservant (S-CSCF) dans le deuxième réseau.

27. Procédé selon la revendication 25, dans lequel l'annulation d'enregistrement est effectuée par les moyens de deuxième réseau directement.

28. Moyens de premier réseau d'un premier réseau dans un système de réseau de communication comprenant au moins un premier réseau (GPRS) et au moins un deuxième réseau (IMS) fournissant des services d'application sur le premier réseau, le premier réseau attribuant une adresse IP utilisée par le deuxième réseau, lesdits moyens de premier réseau étant agencés pour :
recevoir, du deuxième réseau, un message associé à une adresse IP attribuée par le premier réseau,
**caractérisés en ce que** lesdits moyens de premier réseau sont agencés pour :
détecter qu'il n'y a aucun canal de communication actif pour ladite adresse IP qui est attribuée à un équipement d'utilisateur ; et
envoyer une indication du fait que l'équipement d'utilisateur n'est pas joignable par l'intermédiare de ladite adresse IP au deuxième réseau.

29. Moyens de deuxième réseau d'un deuxième réseau dans un système de réseau de communication comprenant au moins un premier réseau (GPRS) et au moins un deuxième réseau (IMS) fournissant des services d'application sur le premier réseau, le premier réseau attribuant une adresse IP utilisée par le deuxième réseau, lesdits moyens de deuxième réseau étant agencés pour :
envoyer un message associé à une adresse IP qui est attribuée à un équipement d'utilisateur au premier réseau,
**caractérisés en ce que** lesdits moyens de deuxième réseau sont agencés pour :
recevoir une indication du fait qu'un équipement d'utilisateur n'est pas joignable par l'intermédiaire d'une adresse IP, laquelle indication est envoyée par le premier réseau.

30. Système de réseau de communication comprenant au moins un premier réseau (GPRS) et au moins un deuxième réseau fournissant des services d'application sur le premier réseau, le premier réseau attribuant une adresse IP utilisée par le deuxième réseau, ledit système étant **caractérisé en ce qu'**il comprend :
des moyens pour détecter que l'attribution de l'adresse IP attribuée à un équipement d'utilisateur est annulée par le premier réseau ; et
des moyens pour lancer une annulation d'enregistrement de l'adresse IP dont l'attribution a été annulée dans le deuxième réseau.

31. Système selon la revendication 30, comprenant en outre une entité de commande (PCF) qui est agencée pour communiquer avec un élément de réseau de commande (GGSN) dans le premier réseau et un élément de réseau desservant l'appel dédié (CSCF) dans le deuxième réseau, l'élément de réseau desservant l'appel dédié desservant l'application demandée,
dans lequel l'élément de réseau de commande détecte une désactivation de canal de communication, et informe l'entité de commande de celle-ci,
dans lequel l'entité de commande détecte que le canal de communication désactivé représente un contexte PDP de signalisation et lance l'annulation d'enregistrement dans l'élément de réseau desservant l'appel dédié.

32. Système selon la revendication 31, dans lequel l'élément de réseau de commande délivre une indication du contexte PDP de signalisation à l'entité de commande.

33. Système selon la revendication 31, dans lequel l'entité de commande détecte que le canal de communication désactivé représente un contexte PDP de signalisation en vérifiant les informations d'état de demande dans l'entité de commande.

34. Système selon la revendication 31, dans lequel l'élément de réseau de commande est informé par un élément de réseau desservant dans le premier réseau d'une désactivation de canal de communication et achemine ces informations vers l'entité de commande.

35. Système selon la revendication 30, dans lequel un élément de réseau dans le premier réseau détecte l'annulation de l'attribution de l'adresse IP et informe un serveur de l'annulation de l'attribution, et le serveur lance une annulation d'enregistrement dans les éléments de réseau desservant l'appel dans le deuxième réseau, auxquels ladite adresse IP est associée.

36. Système selon la revendication 35, dans lequel le serveur est un serveur d'abonnés nominaux (HSS).

37. Système selon la revendication 35, dans lequel un élément de réseau (SGSN) dans le premier réseau informe une base de données (HLR) de l'annulation de l'attribution, la base de données nominale informe une entité desservant la mobilité (UMS) de l'annulation d'attribution, et l'entité desservant la mobilité lance l'annulation d'enregistrement dans un élément de réseau desservant l'appel dédié (CSCF) dans le deuxième réseau, l'élément de réseau desservant l'appel dédié desservant l'application demandée.

38. Système selon la revendication 35, dans lequel l'élément de réseau dans le premier réseau détecte un détachement de l'équipement d'utilisateur entraînant l'annulation d'attribution de toutes les adresses IP de l'équipement d'utilisateur et informe le serveur de l'annulation d'attribution, et le serveur lance une annulation d'enregistrement dans tous les éléments de réseau desservant l'appel de l'équipement d'utilisateur.

39. Système selon la revendication 35, dans lequel un élément de réseau de commande (GGSN) dans le premier réseau mémorise les adresses des éléments de réseau desservant l'appel proposés à l'équipement d'utilisateur en relation avec l'adresse IP attribuée et une identification d'utilisateur, l'élément de réseau de commande attribuant l'adresse IP et étant impliqué dans la procédure de découverte d'un élément de réseau desservant l'appel (CSCF) dans le deuxième réseau, les éléments de réseau desservant l'appel étant capables de desservir l'application demandée, et, lorsque l'élément de réseau de commande détecte l'annulation d'attribution de l'adresse IP, il lance l'annulation d'enregistrement dans tous les éléments de réseau desservant l'appel mémorisés associés aux adresses IP dans le deuxième réseau.

40. Système selon la revendication 35, dans lequel l'équipement d'utilisateur informe un élément de réseau de commande (GGSN) dans le premier réseau à chaque fois qu'il s'enregistre auprès d'un élément de réseau desservant l'appel (CSCF) dans le deuxième réseau, l'élément de réseau de commande attribuant l'adresse IP et étant impliqué dans la procédure de découverte d'un élément de réseau desservant l'appel (CSCF) dans le deuxième réseau, les éléments de réseau desservant l'appel étant capables de desservir l'application demandée, dans lequel l'élément de réseau de commande mémorise les adresses des éléments de réseau desservant l'appel enregistrés en relation avec les adresses IP attribuées et une identification d'utilisateur, et, lorsque l'élément de réseau de commande détecte l'annulation de l'attribution des adresses IP, il lance l'annulation d'enregistrement dans tous les noeuds de réseau desservant l'appel mémorisés associés aux adresses IP.

41. Système selon la revendication 35, dans lequel une annulation d'attribution de l'adresse IP provoquée par une désactivation de canal de communication est détectée par un élément de réseau de commande dans le premier réseau, et le serveur est informé par l'élément de réseau de commande de l'annulation d'attribution.

42. Système selon la revendication 35, dans lequel une annulation d'attribution de l'adresse IP provoquée par un détachement de l'équipement d'utilisateur est détectée par un élément de réseau desservant (SGSN) dans le premier réseau, et le serveur nominal est informé par l'élément de réseau desservant de l'annulation d'attribution.

43. Système selon la revendication 35, dans lequel le serveur est informé par l'équipement d'utilisateur de tous les éléments de réseau desservant l'appel auprès desquels l'équipement d'utilisateur est enregistré.

44. Système selon la revendication 30, dans lequel l'enregistrement de l'adresse IP est annulé dans le deuxième réseau en effaçant un enregistrement dans un serveur nominal (HSS) dans le premier réseau par un élément de réseau desservant l'appel dans le deuxième réseau.

45. Système selon la revendication 30, dans lequel une adresse IP est attribuée à chaque demande de canal de communication effectuée par l'équipement d'utilisateur.

46. Système selon l'une quelconque des revendications 30 à 45, dans lequel le lancement de l'annulation d'enregistrement comprend la fourniture d'un message d'annulation d'enregistrement.

47. Système selon l'une quelconque des revendications 30 à 46, dans lequel le premier réseau est un réseau d'accès sans fil.

48. Système selon l'une quelconque des revendications 30 à 47, dans lequel le deuxième réseau est un réseau multimédia IP.

49. Système selon l'une quelconque des revendications 30 à 48, dans lequel le canal de communication est un contexte PDP.

50. Entité de commande qui est agencée pour communiquer avec un élément de réseau de commande (GGSN) dans un premier réseau et un élément de réseau desservant l'appel dédié (CSCF) dans un deuxième réseau fournissant des services d'application sur le premier réseau, le premier réseau attribuant une adresse IP utilisée par le deuxième réseau, l'élément de réseau desservant l'appel dédié desservant l'application demandée,
**caractérisée en ce que**
l'entité de commande reçoit des informations de l'élément de réseau de commande concernant une désactivation de canal de communication,
dans laquelle l'entité de commande détecte que le canal de communication désactivé représente un contexte PDP de signalisation et lance l'annulation d'enregistrement dans l'élément de réseau desservant l'appel dédié.

51. Procédé pour effectuer une communication entre au moins un premier réseau (GPRS) et au moins un deuxième réseau fournissant des services d'application sur le premier réseau, le premier réseau attribuant une adresse IP utilisée par le deuxième réseau, ledit procédé étant **caractérisé en ce qu'**il consiste à :
détecter que l'attribution de l'adresse IP attribuée à un équipement d'utilisateur est annulée par le premier réseau ; et
lancer une annulation d'enregistrement de l'adresse IP dont l'attribution a été annulée dans le deuxième réseau.

52. Procédé selon la revendication 51, comprenant en outre l'étape consistant à :
prévoir une entité de commande (PCF) agencée pour communiquer avec un élément de réseau de commande (GGSN) dans le premier réseau et un élément de réseau desservant l'appel dédié (CSCF) dans le deuxième réseau, l'élément de réseau desservant l'appel dédié desservant l'application demandée,
détecter une désactivation de canal de communication par l'élément de réseau de commande et informer l'entité de commande de celle-ci,
dans lequel, lorsqu'il est détecté par l'entité de commande que le canal de communication désactivé représente un contexte PDP de signalisation, l'annulation d'enregistrement dans l'élément de réseau desservant l'appel dédié est lancée.

53. Procédé selon la revendication 52, dans lequel une indication du contexte PDP de signalisation est délivrée à l'entité de commande par l'élément de réseau de commande.

54. Procédé selon la revendication 52, dans lequel il est détecté par l'entité de commande que le canal de communication désactivé représente un contexte PDP de signalisation en vérifiant les informations d'état de demande dans l'entité de commande.

55. Procédé selon la revendication 52, dans lequel l'élément de réseau de commande est informé par un élément de réseau desservant dans le premier réseau de la désactivation de canal de communication et ces informations sont envoyées à l'entité de commande.

56. Procédé selon la revendication 51, dans lequel l'annulation d'attribution de l'adresse IP est détectée par un élément de réseau dans le premier réseau et un serveur est informé de l'annulation d'attribution, et une annulation d'enregistrement est lancée dans les éléments de réseau desservant l'appel dans le deuxième réseau, auxquels ladite adresse IP est associée.

57. Procédé selon la revendication 56, dans lequel le serveur est un serveur d'abonnés nominaux (HSS).

58. Procédé selon la revendication 56, dans lequel une base de données (HLR) est informée par un élément de réseau (SGSN) dans le premier réseau de l'annulation d'attribution, une entité desservant la mobilité (UMS) est informée par la base de données nominale de l'annulation d'attribution, et l'annulation d'enregistrement est lancée par l'entité desservant la mobilité dans un élément de réseau desservant l'appel dédié (CSCF) dans le deuxième réseau, l'élément de réseau desservant l'appel dédié desservant l'application demandée.

59. Procédé selon la revendication 56, dans lequel un détachement de l'équipement d'utilisateur entraînant l'annulation d'attribution pour toutes les adresses IP de l'équipement d'utilisateur est détecté par l'élément de réseau dans le premier réseau et le serveur est informé de l'annulation d'attribution par l'élément de réseau, et une annulation d'enregistrement dans tous les éléments de réseau desservant l'appel de l'équipement d'utilisateur est lancée par le serveur.

60. Procédé selon la revendication 56, dans lequel les adresses des éléments de réseau desservant l'appel proposées à l'équipement d'utilisateur en relation avec l'adresse IP attribuée et une identification d'utilisateur sont mémorisées dans un élément de réseau de commande (GGSN) dans le premier réseau, l'élément de réseau de commande attribuant l'adresse IP et étant impliqué dans la procédure de découverte d'un élément de réseau desservant l'appel (CSCF) dans le deuxième réseau, les éléments de réseau desservant l'appel étant capables de desservir l'application demandée, et, lorsque l'élément de réseau de commande détecte l'annulation d'attribution de l'adresse IP, une annulation d'enregistrement dans tous les éléments de réseau desservant l'appel mémorisés associés aux adresses IP dans le deuxième réseau est lancée par l'élément de réseau de commande.

61. Procédé selon la revendication 56, dans lequel un élément de réseau de commande (GGSN) dans le premier réseau est informé par l'équipement d'utilisateur à chaque fois qu'il s'enregistre auprès d'un élément de réseau desservant l'appel (CSCF) dans le deuxième réseau, l'élément de réseau de commande attribuant l'adresse IP et étant impliqué dans la procédure de découverte d'un élément de réseau desservant l'appel (CSCF) dans le deuxième réseau, les éléments de réseau desservant l'appel étant capables de desservir l'application demandée, dans lequel l'élément de réseau de commande mémorise les adresses des éléments de réseau desservant l'appel enregistrés en relation avec les adresses IP attribuées et une identification d'utilisateur, et, lorsque l'élément de réseau de commande détecte l'annulation d'attribution des adresses IP, il lance l'annulation d'enregistrement dans tous les noeuds de réseau desservants l'appel mémorisés associés aux adresses IP.

62. Procédé selon la revendication 56, dans lequel une annulation d'attribution de l'adresse IP provoquée par une désactivation de canal de communication est détectée par un élément de réseau de commande dans le premier réseau, et le serveur est informé par l'élément de réseau de commande de l'annulation d'attribution.

63. Procédé selon la revendication 56, dans lequel une annulation d'attribution de l'adresse IP provoquée par un détachement de l'équipement d'utilisateur est détectée par un élément de réseau desservant (SGSN) dans le premier réseau, et le serveur nominal est informé par l'élément de réseau desservant de l'annulation d'attribution.

64. Procédé selon la revendication 56, dans lequel le serveur est informé par l'équipement d'utilisateur de tous les éléments de réseau desservant l'appel auprès desquels l'équipement d'utilisateur est enregistré.

65. Procédé selon la revendication 51, dans lequel l'enregistrement de l'adresse IP est annulé dans le deuxième réseau en effaçant un enregistrement dans un serveur nominal (HSS) dans le premier réseau par un élément de réseau desservant l'appel dans le deuxième réseau.

66. Procédé selon la revendication 51, dans lequel une adresse IP est attribuée pour chaque demande de canal de communication effectuée par l'équipement d'utilisateur.

67. Procédé selon l'une quelconque des revendications 51 à 66, dans lequel le lancement de l'annulation d'enregistrement comprend la fourniture d'un message d'annulation d'enregistrement.

68. Procédé selon l'une quelconque des revendications 51 à 67, dans lequel le premier réseau est un réseau d'accès sans fil.

69. Procédé selon l'une quelconque des revendications 51 à 68, dans lequel le deuxième réseau est un réseau multimédia IP.

70. Procédé selon l'une quelconque des revendications 51 à 69, dans lequel le canal de communication est un contexte PDP.
